# EUROPÄISCHE PATENTSCHRIFT

(11) **EP 0 960 759 B1**
(45) Veröffentlichungstag und Bekanntmachung des Hinweises auf die Patenterteilung: **13.02.2002**
(21) Anmeldenummer: 98109504.5
(22) Anmeldetag: 26.05.1998
(51) Int. Cl.: B60H 1/03, B60H 1/14, F01P 3/20, F01M 5/00

(54) **Heizung für einen Kraftfahrzeug-Fahrgastraum**
Heating for the passenger compartment of a motor vehicle
Chauffage de l'habitacle d'un véhicule automobile à moteur

(43) Veröffentlichungstag der Anmeldung: 01.12.1999
(73) Patentinhaber: Ford Global Technologies, Inc., Dearborn, Michigan 48136 (US)
(72) Erfinder: Himmelsbach, Johann, Dr, 51789 Lindlar (DE); Limbach, Sigurd, Dr, 42657 Solingen (DE); Dilgen, Peter, Dr, 51469 Bergisch-Gladbach (DE); Weiss, Edwin, 51647 Gummersbach (DE)
(74) Vertreter: Bonsmann, Manfred, Dipl.-Ing.

(56) Entgegenhaltungen:
- EP-A- 0 731 261
- DE-A- 3 118 167
- DE-A- 4 320 145
- FR-A- 2 571 431
- US-A- 5 419 287
- PATENT ABSTRACTS OF JAPAN vol. 097, no. 007, 31. Juli 1997 (1997-07-31) & JP 09 079020 A (NGK SPARK PLUG CO LTD), 25. März 1997 (1997-03-25)
- PATENT ABSTRACTS OF JAPAN vol. 095, no. 011, 26. Dezember 1995 (1995-12-26) & JP 07 228132 A (TOYOTA AUTOM LOOM WORKS LTD), 29. August 1995 (1995-08-29)

## Beschreibung

Die Erfindung bezieht sich auf ein Verfahren zum Heizen eines Kraftfahrzeug-Fahrgastraumes, insbesondere bei einem Kaltstart oder bei ähnlichen Bedingungen, sowie auf Kühl- und Heizungskreisläufe hierfür, wobei das Kraftfahrzeug eine mit Kühlmittel gekühlte und mit Schmiermittel geschmierte Brennkraftmaschine sowie einen Heizungs-Wärmetauscher und einen zuschaltbaren Kühler-Wärmetauscher aufweist.

Zur Heizung des Fahrgastraumes eines Kraftfahrzeuges wird üblicherweise das zur Kühlung der Brennkraftmaschine verwendete und von dieser erwärmte Kühlmittel zu einem Heizungs-Wärmetauscher geführt, in dem von dem Kühlmittel Wärme auf Luft übertragen wird, die dann in den Fahrgastraum eingeleitet wird. Vom Heizungs-Wärmetauscher aus kann das Kühlmittel entweder direkt oder über einen Kühler, der dem Kühlmittel weitere Wärme entzieht, zur Brennkraftmaschine zurückgeleitet werden. Falls eine Heizung des Fahrgastraumes nicht gewünscht ist, kann das Kühlmittel von der Brennkraftmaschine direkt zum Kühler und von dort zurück zur Brennkraftmaschine geleitet werden. Die Förderung des Kühlmittels erfolgt mittels einer Kühlmittelpumpe.

Während der Aufwärmphase der Brennkraftmaschine oder bei extrem kalten Witterungsbedingungen ist die Temperatur des Kühlmittels nicht ausreichend hoch, um ein zufriedenstellendes Heizen des Fahrgastraumes zu ermöglichen, d. h. es liegt ein Fahrgastraum-Heizungsdefizit vor. Zudem werden Brennkraftmaschinen mit immer niedrigerem Kraftstoffverbrauch entwickelt. Dies bedeutet, daß immer mehr der einer Brennkraftmaschine durch den Kraftstoff zugeführten Energie in Bewegungsenergie umgewandelt wird und sich der Anteil der entstehenden Wärmeenergie, beispielsweise in Form von Reibung, Abgaswärme usw., verringert. Im Ergebnis kann es vorkommen, daß eine zum Heizen des Fahrgastraumes ausreichende Erwärmung des Kühlmittels durch die Brennkraftmaschine nicht gewährleistet ist.

Zur Erhöhung der Kühlmitteltemperatur für den Durchlauf durch den Heizungs-Wärmetauscher ist es bekannt, beispielsweise aus der DE 43 20 145 C2 oder der JP 07 228 132 A, das Kühlmittel nach dem Austritt aus der Brennkraftmaschine durch einen Öl/Kühlmittel-Wärmetauscher zu leiten, der mit zum Betrieb von Hydraulikmotoren verwendetem Hydrauliköl gespeist wird. Diese vorbekannten Vorrichtungen erfordern das Vorhandensein eines Hydraulikkreislaufes sowie einen großen konstruktiven Aufwand, da die örtliche Anordnung der Brennkraftmaschine und der Hydraulikeinrichtungen bzw. des Kühl- und Heizungskreislaufes und des Hydraulikkreises aufeinander abgestimmt sein müssen.

Ferner sind aus der EP 0 731 261 A1 oder der JP 09 079 020 A zum Aufheizen des Schmiermittels der Brennkraftmaschine Heizungssysteme bekannt, bei denen zur Abkürzung der Aufwärmphase der Brennkraftmaschine das Schmiermittel in einem Schmiermittel/Wasser-Wärmetauscher erwärmt und dann zur Beibehaltung einer vorgegebenen Temperatur gegebenenfalls gekühlt wird.

Aus der DE 31 18 167 A ist eine Heizeinrichtung bekannt, die eine mit Kühlmittel gekühlte und mit Schmiermittel geschmierte Brennkraftmaschine sowie einen Heizungs-Wärmetauscher und einen Kühler-Wärmetauscher aufweist. Kühler-Wärmetauscher und Heizungs-wärmetauscher sind parallelgeschaltet, wobei der Zufluß zum Heizungs-Wärmetauscher mittels eines Regulierventils ganz oder teilweise unterbunden werden kann. Zum Kühler-Wärmetauscher ist auch noch eine Bypassleitung gelegt, deren Durchflußmenge mittels eines Thermostatventils geregelt wird. Das den Kühler-Wärmetauscher, die Bypassleitung und den Heizungs-Wärmetauscher durchströmende Kühlmittel läuft über eine gemeinsame Rücklaufleitung zunächst zu einem Schmiermittel/Kühlmittel-Wärmetauscher, wird in diesem erwärmt und läuft dann weiter zum Kühlmitteleintritt der Brennkraftmaschine. Dem Schmiermittel/Kühlmittel-Wärmetauscher wird Schmiermittel aus der Brennkraftmaschine zugeführt, wobei in dieser für das Schmiermittel eine Hochdruckförderpumpe und ein Druckabbauelement vorgesehen sind, um das Schmiermittel auf eine erhöhte Temperatur aufzuheizen. Mittels einer Bypassleitung kann das Schmiermittel am Schmiermittel/Kühlmittel-Wärmetauscher vorbeigeleitet werden. Nachteilig ist bei dieser vorbekannten Heizeinrichtung zum einen, daß zur Erzielung einer wirksamen Heizung mit der Hochdruckförderpumpe und dem anschließenden Druckabbauelement ein hoher technischer Aufwand erforderlich ist, und zum anderen, daß bei der Umschaltung auf Heizen oder Nichtheizen des Kühlmittels im Schmiermittel/Kühlmittel-Wärmetauscher relativ lange Reaktionszeiten auftreten.

Demgegenüber liegt die Aufgabe der vorliegenden Erfindung darin, die wirksame Heizung eines Kraftfahrzeug-Fahrgast-, raumes, insbesondere bei einem Kaltstart oder bei ähnlichen Bedingungen, mit einfacheren Mitteln zu ermöglichen und gleichzeitig die Reaktionszeiten bei einem Umschalten von Heizen auf Nichtheizen oder umgekehrt zu verkürzen.

Erfindungsgemäß wird diese Aufgabe durch die Gemeinsamkeit aller Merkmale des neuen Anspruchs 1 bzw. 2 gelöst.

Demnach wird bei einem Verfahren der eingangs genannten Art so vorgegangen, daß das aus der Brennkraftmaschine austretende Kühlmittel in dem Heizungs-Wärmetauscher auf eine Temperatur abgekühlt wird, die niedriger als die des Schmiermittels ist, anschließend in einem Schmiermittel/Kühlmittel-Wärmetauscher wieder erwärmt und dann, ohne den Kühler-Wärmetauscher zu durchströmen, der Brennkraftmaschine wieder zugeführt wird.

Bei einem gattungsgemäßen Kühl- und Heizungskreislauf wird erfindungsgemäß vorgeschlagen, in Strömungsrichtung hinter dem Heizungs-Wärmetauscher einen Schmiermittel/Kühlmittel-Wärmetauscher anzuordnen, welchem Schmiermittel aus der Brennkraftmaschine zugeführt wird und dessen Kühlmittelaustritt ohne Einbindung des Kühler-Wärmetauschers mit dem Kühlmitteleintritt der Brennkraftmaschine verbindbar ist, wobei die Strömungsrate des durch den Heizungs-Wärmetauscher strömenden Kühlmittels so weit reduzierbar ist, daß die Kühlmittelaustrittstemperatur aus dem Heizungs-Wärmetauscher niedriger ist als die Schmiermitteltemperatur.

Durch die erfindungsgemäßen Maßnahmen wird eine wirksame Aufheizung des Fahrgastraumes eines Kraftfahrzeuges auch dann erzielt, wenn das Kühlmittel noch nicht seine normale Betriebstemperatur erreicht hat. Die Erfindung macht sich die Erkenntnis zunutze, daß während der Aufwärmphase einer Brennkraftmaschine das Kühlmittel deutlich wärmer als das Schmiermittel ist. Erst im aufgewärmten Zustand ist dagegen das Schmiermittel wärmer als das Kühlmittel. Dadurch, daß das Kühlmittel im Heizungs-Wärmetauscher auf eine Temperatur abgekühlt wird, die niedriger als die des Schmiermittels ist, wird eine beträchtliche Wärmemenge zur Aufheizung des Fahrgastraumes zur Verfügung gestellt, die vor allem beim Kaltstart oder bei sehr kühlen Witterungsbedingungen für ein schnelles Aufheizen des Fahrgastraumes sorgt. Da dem Heizungs-Wärmetauscher ein Schmiermittel/Kühlmittel-Wärmetauscher nachgeschaltet ist, dem Schmiermittel aus der Brennkraftmaschine zurückgeführt wird, wird das Kühlmittel wieder erwärmt. Somit wird das Kühlwasser bei einem erneuten Durchlauf durch den Motor von einem höheren Eingangstemperaturniveau aus erwärmt und verläßt den Motor mit erhöhter Temperatur. Gleichzeitig wird über die Absenkung der Öltemperatur die Reibleistung des Motors erhöht. Dies kompensiert die Motorsteuerung durch zusätzlichen Kraftstoff, was im Gegenzug wieder die verfügbare Abwärme für das Kühlwasser erhöht. Eine zusätzliche elektrische oder kraftstoffbetriebene Heizeinrichtung für den Fahrgastraum kann entfallen.

Vorzugsweise ist der Heizungs-Wärmetauscher in Gegenstrombauweise ausgebildet. Die Durchströmungsrate durch einen Gegenstrom-Heizungs-Wärmetauscher ist im Vergleich zu Querstrom-Heizungs-Wärmetauschern reduziert, so daß dem den Gegenstrom-Heizungs-Wärmetauscher durchströmenden Kühlmittel auch bei relativ niedriger Eintrittstemperatur eine große Wärmemenge entzogen werden kann. So wird auch bei geringem Kühlmitteldurchsatz ein guter Wirkungsgrad erzielt.

In vorteilhafter Weiterbildung der Erfindung ist die Kühlmittelpumpe in einer Hauptleitung in Strömungsrichtung zwischen Heizungs-Wärmetauscher und Brennkraftmaschine angeordnet und zweigt zwischen Kühlmittelpumpe und Brennkraftmaschine eine wegschaltbare Nebenleitung zum Schmiermittel/Kühlmittel-Wärmetauscher ab, die in Strömungsrichtung vor der Kühlmittelpumpe wieder in die Hauptleitung einmündet. Hierdurch kann eine hohe Strömungsrate des Kühlmittels durch den Schmiermittel/Kühlmittel-Wärmetauscher und somit eine gute Wärmeübertragung erreicht werden, so daß die Temperatur des in die Brennkraftmaschine eintretenden Kühlmittels möglichst hoch ist.

Dabei ist besonders bevorzugt die Nebenleitung durch ein in Strömungsrichtung vor dem Schmiermittel/Kühlmittel-Wärmetauscher angeordnetes Schließventil wegschaltbar.

Statt durch ein Schließventil kann ebenfalls in bevorzugter Weise die Nebenleitung durch ein in Strömungsrichtung vor dem Schmiermittel/Kühlmittel-Wärmetauscher angeordnetes Dreiwegeventil wegschaltbar sein, dessen dritter Anschluß mit dem Kühlmittelaustritt der Brennkraftmaschine verbunden ist.

In einer weiteren vorteilhaften Ausführungsform der Erfindung ist der den Heizungs-Wärmetauscher und den Schmiermittel/Kühlmittel-Wärmetauscher enthaltende Kreislauf für eine auf niedrige bis mittlere Brennkraftmaschinen-Drehzahlen bezogene Kühlmittel-Strömungsrate ausgelegt. Dieses ist eine kostengünstige Möglichkeit, bei der keine weiteren Drossel- oder Steuereinrichtungen für den Kühlmittelstrom notwendig sind.

Zur Steuerung der Strömungsrate durch den Heizungs-Wärmetauscher kann zwischen diesem und dem Schmiermittel/Kühlmittel-Wärmetauscher ein Drosselventil angeordnet sein. Hierdurch wird eine einfache Einstellung der Strömungsrate erreicht.

In einer ebenfalls bevorzugten Ausführungsform der Erfindung ist der Kühlmittelaustritt des Heizungs-Wärmetauschers über eine Verzweigung einerseits mit dem Kühlmitteleintritt des Schmiermittel/Kühlmittel-Wärmetauschers und andererseits mit dem Kühlmitteleintritt der Brennkraftmaschine verbunden, wobei zur Verbindung des Heizungs-Wärmetauschers mit dem Schmiermittel/Kühlmittel-Wärmetauscher ein Dreiwegeventil vorgesehen ist, dessen zweiter Einlaß mit dem Kühlmittelaustritt der Brennkraftmaschine verbunden ist. Hierdurch kann ebenfalls die Strömungsrate des Kühlmittels durch den Heizungs-Wärmetauscher verringert oder erhöht werden. Weitere alternative Ausführungsformen sind hier denkbar. Beispielsweise könnte, statt den Heizungs-Wärmetauscher zu umgehen, ein Bypass zum Schmiermittel/Kühlmittel-Wärmetauscher gelegt werden.

In weiterer günstiger Fortbildung der Erfindung ist ein zweiter Heizungs-Wärmetauscher parallel zum ersten Heizungs-Wärmetauscher und zum Schmiermittel/Kühlmittel-Wärmetauscher geschaltet und ist die Strömungsrate des Kühlmittels durch den zweiten Heizungs-Wärmetauscher größer als diejenige durch den ersten Heizungs-Wärmetauscher. Hierdurch wird ein zweiter Kühlmittelstrom geschaffen, dessen Temperatur beim Wiedereintritt in die Brennkraftmaschine noch relativ hoch ist und daher zur schnelleren Erwärmung der Brennkraftmaschine beitragen kann.

Es kann aber auch vorgesehen sein, daß ein zweiter Heizungs-Wärmetauscher parallel zum ersten Heizungs-Wärmetauscher und zum Schmiermittel/Kühlmittel-Wärmetauscher geschaltet und die Strömungsrate des den zweiten Heizungs-Wärmetauscher durchströmenden Kühlmittels einstellbar ist. Dieses ist vorteilhaft, wenn der Druckabfall im ersten Heizungs-Wärmetauscher nicht allzu hoch ist. In diesem Fall wird die Strömungsrate durch den zweiten Heizungs-Wärmetauscher hoch eingestellt werden, wenn ein Fahrgastraum-Heizungsdefizit vorliegt, und niedrig eingestellt werden, wenn kein Heizungsdefizit vorliegt.

In vorteilhafter Ausgestaltung der Erfindung ist eine Kühlmittelpumpe mit variabler Fördermenge in Strömungsrichtung vor einer Verzweigung der Kühlmittelleitung zu einerseits dem Heizungs-Wärmetauscher und zu andererseits einer Bypassleitung zu einem Kühlmittel-Wärmetauscher angeordnet und ist in der Bypassleitung ein Überdruckventil vorgesehen, das nur bei Überschreiten eines vorgegebenen Förderdruckes Kühlmittel unmittelbar zum Kühler-Wärmetauscher und von dort zurück zu einem Kühlmitteleintritt an der Brennkraftmaschine führt. Mit diesen Maßnahmen kann, wenn eine erhöhte Fahrgastraum-Heizleistung erforderlich ist, auf einfache Weise der Kühler-Wärmetauscher weggeschaltet werden. Hierzu ist lediglich eine entsprechende Regelung des Förderdruckes der Kühlmittelpumpe notwendig.

Vorzugsweise ist das Überdruckventil ein thermostatisch gesteuertes Überdruckventil. Auf diese Weise kann ein unter Umständen unerwünscht hoher notwendiger Förderdruck und damit ein unnötiger Energieverbrauch vermieden werden.

Besonders bevorzugt sind bei einer Brennkraftmaschine, deren Kühlmittelauslaß und deren Kühlmitteleinlaß zueinander benachbart angeordnet sind, die für die Wärme-Steuerung erforderlichen Bauteile, wie die variable Kühlmittelpumpe, die Bypassleitung mit dem Überdruckventil, der Schmiermittel/Kühlmittel-Wärmetauscher und der Kühlmitteleintritt in einem Wärme-Steuerungsmodul zusammengefaßt, das an die Brennkraftmaschine im Bereich deren Kühlmittelauslasses und -einlasses anfügbar ist. Hierdurch wird die Montage und Wartung erheblich vereinfacht.

Die Erfindung wird nachfolgend anhand der Zeichnung beispielshalber noch näher erläutert. Es zeigen:
- Fig. 1: eine schematische Darstellung einer ersten Ausführungsform eines erfindungsgemäßen Kühl- und Heizungskreislaufes, bei dem ein Schmiermittel/Kühlmittel-Wärmetauscher in einer durch ein Schließventil wegschaltbaren Nebenleitung angeordnet ist;
- Fig. 2: eine der Fig. 1 ähnliche Darstellung einer weiteren Ausführungsform, bei der der Schmiermittel/Kühlmittel-Wärmetauscher in einer durch ein Dreiwegeventil wegschaltbaren Nebenleitung angeordnet ist;
- Fig. 3: eine der Fig. 1 ähnliche Darstellung einer weiteren Ausführungsform, bei der zwischen Heizungs-Wärmetauscher und Schmiermittel/Kühlmittel-Wärmetauscher ein Drosselventil angeordnet ist;
- Fig. 4: eine der Fig. 1 ähnliche Darstellung einer weiteren Ausführungsform, bei der ein Dreiwegeventil vorgesehen ist, dessen zwei Einlässe mit dem Kühlmittelaustritt des Heizungs-Wärmetauschers und dem der Brennkraftmaschine und dessen Auslaß mit dem Schmiermittel/Kühlmittel-Wärmetauscher verbunden sind;
- Fig. 5: eine der Fig. 1 ähnliche Darstellung einer weiteren Ausführungsform, bei der die Strömungsrate des Kühlmittels durch den Heizungs-Wärmetauscher mittels der Kühlmittelleitung selbst eingestellt ist;
- Fig. 6: bis 8 den Fig. 3 bis 5 entsprechende Ausführungsformen, wobei ein zweiter Heizungs-Wärmetauscher vorgesehen ist;
- Fig. 9: eine der Fig. 6 ähnliche Ausführungsform, bei der statt dem ersten dem zweiten Heizungs-Wärmetauscher ein Drosselventil nachgeschaltet ist;
- Fig. 10: eine der Fig. 1 ähnliche Darstellung einer weiteren Ausführungsform, bei der die zum Kühler-Wärmetauscher führende Leitung durch eine Kühlmittelpumpe mit variabler Fördermenge und ein Überdruckventil wegschaltbar ist;
- Fig. 11: eine der Fig. 10 entsprechende Ausführungsform, bei der mehrere Bauteile zu einem Modul zusammengefaßt sind; und
- Fig. 12: eine schematische Darstellung einer alternativen Ausführungsform des Überdruckventils aus den Figuren 10 und 11.

In den Figuren sind gleiche Elemente mit gleichen Bezugszeichen versehen.

Die in den Figuren gezeigten Kühl- und Heizungskreisläufe für Kraftfahrzeuge weisen zunächst eine Brennkraftmaschine 1 mit einem wassergekühlten Zylinderblock 2 und einem ebenso wassergekühlten Zylinderkopf 3 auf. Das in der Brennkraftmaschine 1 im Zylinderblock 2 und im Zylinderkopf 3 zirkulierende Kühlwasser bzw. Kühlmittel wird zu einem Kühlmittelaustritt 4 geführt, an dem sich eine Kühlmittelleitung 5 anschließt.

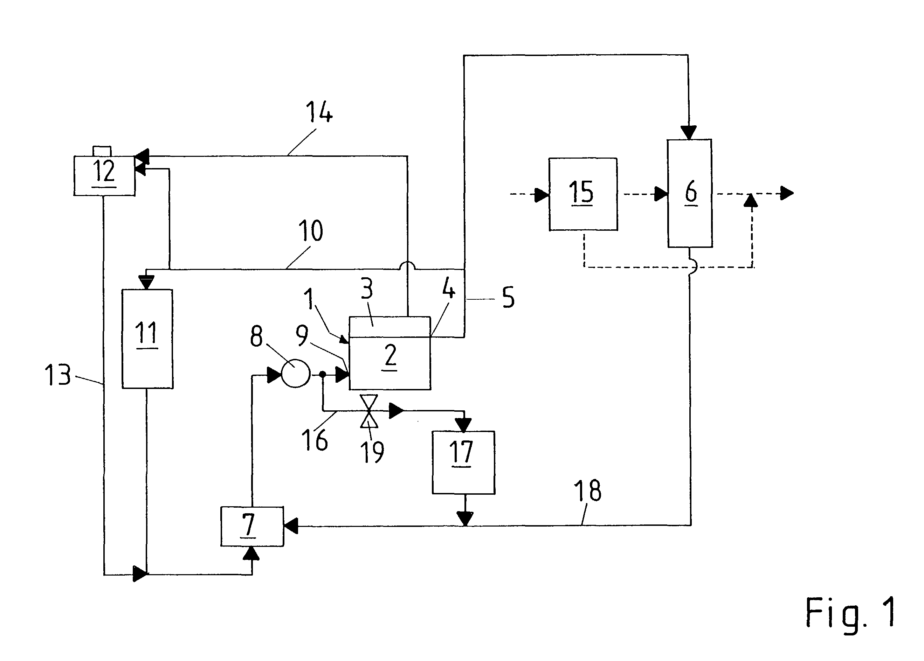

Wie aus Fig. 1 ersichtlich ist, führt die Kühlmittelleitung 5 zu einem Heizungs-Wärmetauscher 6 und über ein Thermostat 7 und eine Kühlmittelpumpe 8 zurück zu einem Kühlmitteleintritt 9 der Brennkraftmaschine 1. Als Heizungs-Wärmetauscher 6 wird ein Gegenstrom-Heizungs-Wärmetauscher eingesetzt. Dieser weist auch bei geringem Kühlmitteldurchsatz einen guten Wirkungsgrad auf.

Von der zum Heizungs-Wärmetauscher 6 führenden Kühlmittelleitung 5 zweigt eine Kühlmittelleitung 10 zum Kühlmitteleintritt eines Kühler-Wärmetauschers 11 ab, dessen Kühlmittelaustritt mit dem Thermostat 7 verbunden ist, durch den eine Zirkulation des Kühlmittels durch den Kühler-Wärmetauscher 11 verhindert werden kann. Mit dem Kühler-Wärmetauscher 11 und dem Kühlmittelraum im Zylinderkopf 3 ist ein Ausgleichsgefäß 12 über entsprechende Leitungen 13, 14 verbunden.

Bei den in den Figuren gezeigten Kühl- und Heizungskreisläufen für ein Kraftfahrzeug wird der Heizungs-Wärmetauscher 6 über ein Steuerventil 15 luftseitig gesteuert. Eine wasserseitige Regelung der Fahrgastraum-Temperatur ist ebenfalls möglich.

Zwischen der Kühlmittelpumpe 8 und dem Kühlmitteleintritt 9 der Brennkraftmaschine 1 zweigt eine Kühlmittelleitung 16 zu einem Schmiermittel/Kühlmittel-Wärmetauscher 17 ab, der mit Schmiermittel aus der Brennkraftmaschine 1 versorgt wird. Der Kühlmittelaustritt des Schmiermittel/Kühlmittel-Wärmetauschers ist in Strömungsrichtung vor dem Thermostat 7 an die vom Heizungs-Wärmetauscher 6 kommende Kühlmittelleitung 18 angeschlossen, so daß ein Kurzkreislauf "Kühlmittelpumpe - Schmiermittel/Kühlmittel-Wärmetauscher- Kühlmittelpumpe" vorhanden ist.

In der zum Schmiermittel/Kühlmittel-Wärmetauscher 17 führenden Kühlmittelleitung 16 ist ein Schließventil 19 angeordnet, um die Menge des den Schmiermittel/Kühlmittel-Wärmetauscher 17 durchströmenden Kühlmittels zu steuern.

Abhängig von der Wärmeanforderung für die Fahrgastraum-Heizung wird der in Fig. 1 dargestellte Kühl- und Heizungskreislauf im wesentlichen in drei unterschiedlichen Betriebszuständen betrieben werden:

In Betriebszuständen mit einem beträchtlichen Fahrgastraum-Heizungsdefizit, wie zum Beispiel in der Aufwärmphase und/oder bei extrem kalten Witterungsbedingungen, ist das Schließventil 19 geöffnet. Das Kühlmittel tritt in den Schmiermittel/Kühlmittel-Wärmetauscher 17 vom Heizungs-Wärmetauscher 6 kommend mit einer Temperatur ein, die niedriger als die des Schmiermittels ist und wird von diesem erwärmt.

In Betriebszuständen ohne Fahrgastraum-Heizungsdefizit ist das Schließventil 19 geschlossen, d. h. der Schmiermittel/Kühlmittel-Wärmetauscher 17 weggeschaltet.

In Betriebszuständen mit einem Überschuß an zur Verfügung stehender Wärmeenergie im Kühlmittel wird das Schließventil 19 wieder geöffnet. Der Schmiermittel/Kühlmittel-Wärmetauscher 17 dient in diesem Fall zum Abkühlen des Kühlmittels, d. h. zum Erwärmen des Schmiermittels, wodurch dieses schneller die Betriebstemperatur erreicht.

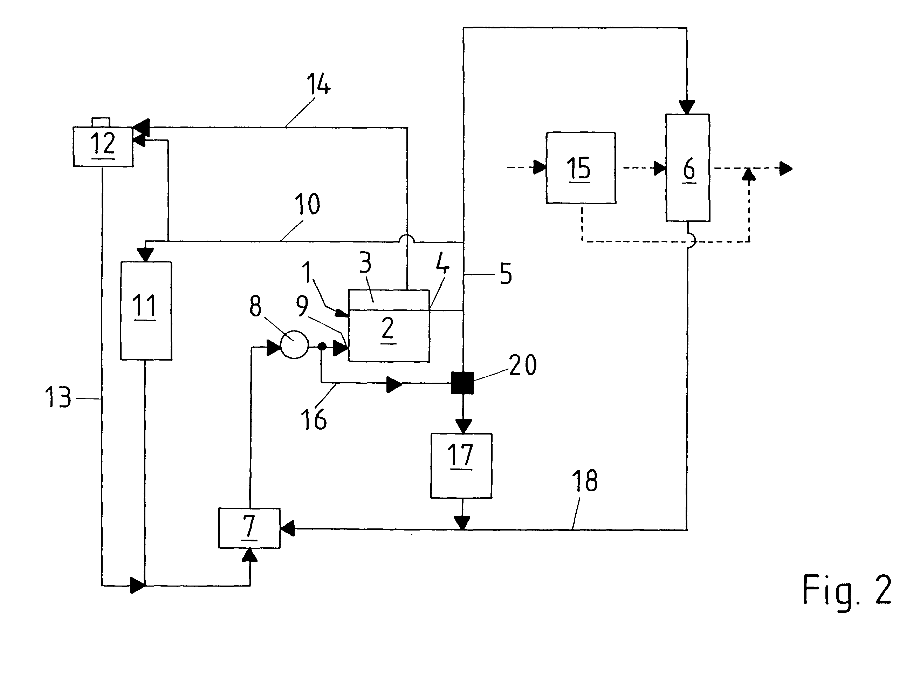

Statt eines Schließventils 19 kann, wie in Fig. 2 dargestellt, auch ein Dreiwegeventil 20 zwischengeschaltet werden. Ein Einlaß des Dreiwegeventils ist mit der Kühlmittelpumpe 8 verbunden, während der zweite Einlaß über eine Abzweigung der Kühlmittelleitung 5 mit dem Kühlmittelaustritt 4 der Brennkraftmaschine 1 verbunden ist. Der Auslaß des Dreiwegeventils 20 ist an den Kühlmitteleintritt des Schmiermittel/Kühlmittel-Wärmetauschers 17 angeschlossen.

Bei Verwendung eines Dreiwegeventils 20 wird, falls eine maximale Fahrgastraum-Heizung gewünscht ist, die Nebenleitung 16 geöffnet, falls dagegen ein möglichst schnelles Aufheizen des Schmiermittels gewünscht ist, die Nebenleitung 16 geschlossen und die Leitung 5 zum Kühlmittelaustritt 4 der Brennkraftmaschine 1 geöffnet, wodurch das warme, aus der Brennkraftmaschine 1 austretende Kühlmittel in den Schmiermittel/Kühlmittel-Wärmetauscher 17 eintritt.

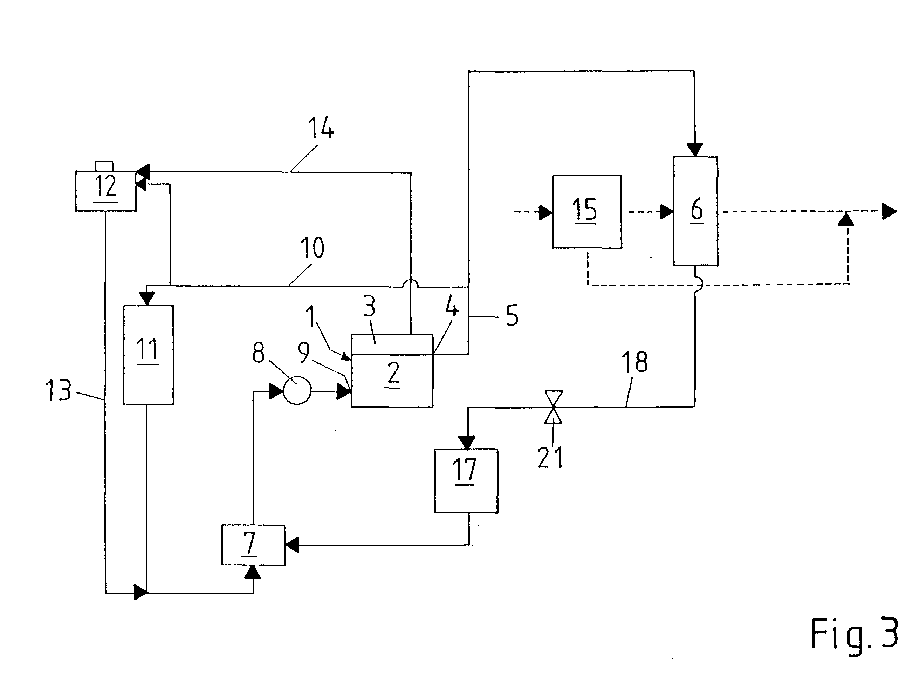

Bei den in den Figuren 3 bis 5 dargestellten Ausführungsformen ist der Schmiermittel/Kühlmittel-Wärmetauscher 17 in die Kühlmittelleitung 18 zwischen Heizungs-Wärmetauscher 6 und Thermostat 7 geschaltet. Hierbei ist keine Abzweigung von der von der Kühlmittelpumpe 8 zur Brennkraftmaschine 1 führenden Kühlmittelleitung zum Schmiermittel/Kühlmittel-Wärmetauscher 17 hin vorgesehen.

Zur Steuerung der Strömungsrate bzw. der Durchflußmenge des den Heizungs-Wärmetauschers 6 durchströmenden Kühlmittels ist gemäß Fig. 3 zwischen dem Heizungs-Wärmetauscher 6 und dem Schmiermittel/Kühlmittel-Wärmetauscher 17 ein Drosselventil 21 zwischengeschaltet. Dieses wird in Abhängigkeit von dem Wärmebedarf für die Fahrgastraum-Heizung wie folgt betätigt:

In Betriebszuständen mit einem Fahrgastraum-Heizungsdefizit wird das Drosselventil 21 teilweise geschlossen und damit die Kühlmittel-Strömungsrate durch den Heizungs-Wärmetauscher 6 hindurch niedrig eingestellt.

In Betriebszuständen ohne Fahrgastraum-Heizungsdefizit wird das Drosselventil 21 geöffnet und damit die Kühlmittel-Strömungsrate hoch eingestellt. In diesem Fall ist der Temperaturabfall des Kühlmittels in dem Heizungs-Wärmetauscher 6 geringer, so daß das Kühlmittel in dem Schmiermittel/Kühlmittel-Wärmetauscher 17 das Schmiermittel erwärmt.

Der Betätigung des Drosselventils 21 kann die Brennkraftmaschinen-Drehzahl und der Lastverlauf unter Bezugnahme auf die Umgebungstemperatur zugrunde gelegt werden. Eine einfachere und möglicherweise wirksamere Möglichkeit kann in der Anordnung eines Temperatursensors für die Ausströmtemperatur der Fahrgastraum-Heizungsluft liegen. Falls die Temperatur nicht einen vorgegebenen Temperaturgrenzwert nach einer vorgegebenen Zeitdauer erreicht, wird das Drosselventil 21 teilweise geschlossen und damit die erhöhte Fahrgastraum-Heizleistung aktiviert.

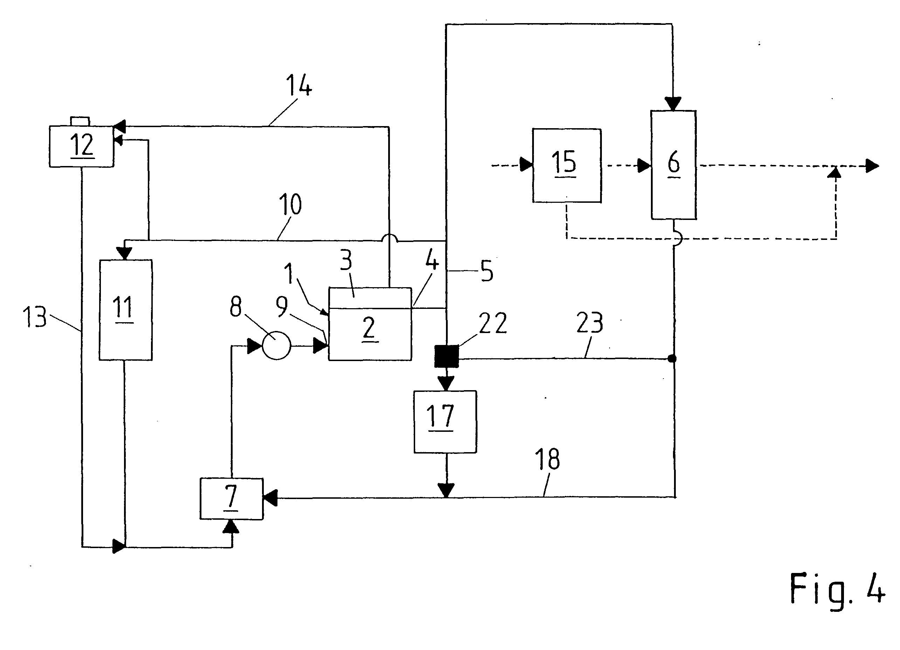

Alternativ kann, wie in Fig. 4 dargestellt, ein Dreiwegeventil 22 vorgesehen sein. Bei dieser Ausführungsform ist der Kühlmittelaustritt des Heizungs-Wärmetauschers 6 über eine Abzweigung 23 von der Kühlmittelleitung 18 mit einem Einlaß des Dreiwegeventils 22 verbunden. Der andere Einlaß des Dreiwegeventils 22 ist mit dem Kühlmittelaustritt 4 der Brennkraftmaschine 1 verbunden. An den Auslaß des Dreiwegeventils 22 ist der Kühlmitteleintritt des Schmiermittel/Kühlmittel-Wärmetauscher 17 angeschlossen.

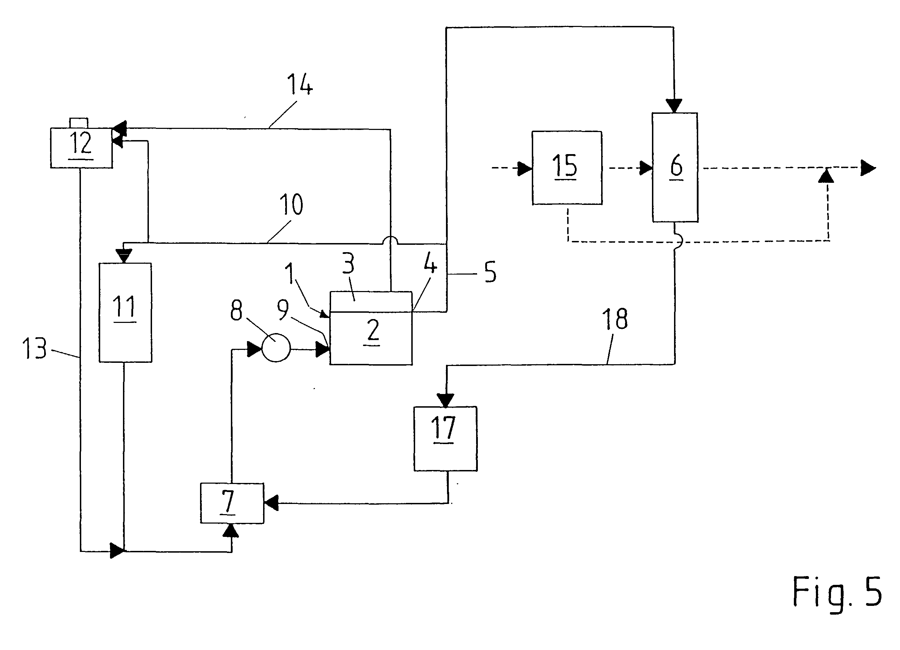

In einer in Fig. 5 dargestellten dritten Variante sind die Kühlmittelleitungen 18 von vornherein konstruktiv für niedrige bis mittlere Brennkraftmaschinen-Drehzahlen ausgelegt, so daß keinerlei besondere Einrichtungen zur Reduzierung der Strömungsrate notwendig sind.

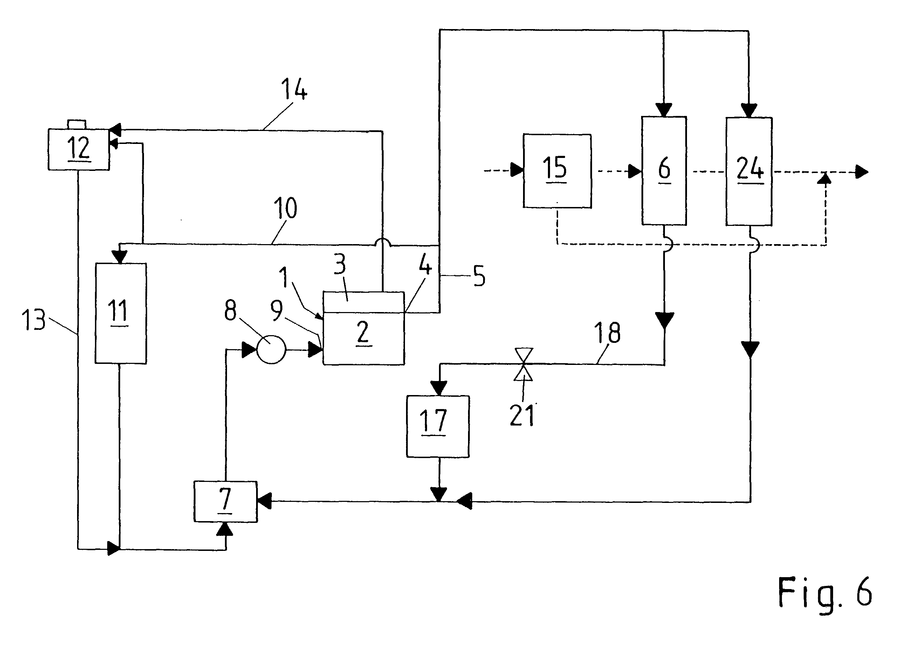

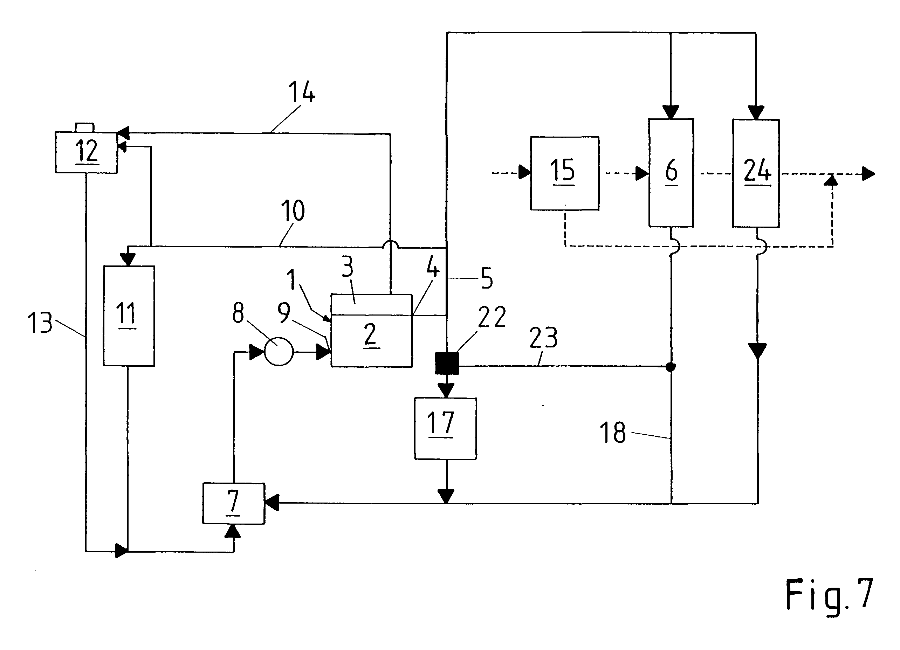

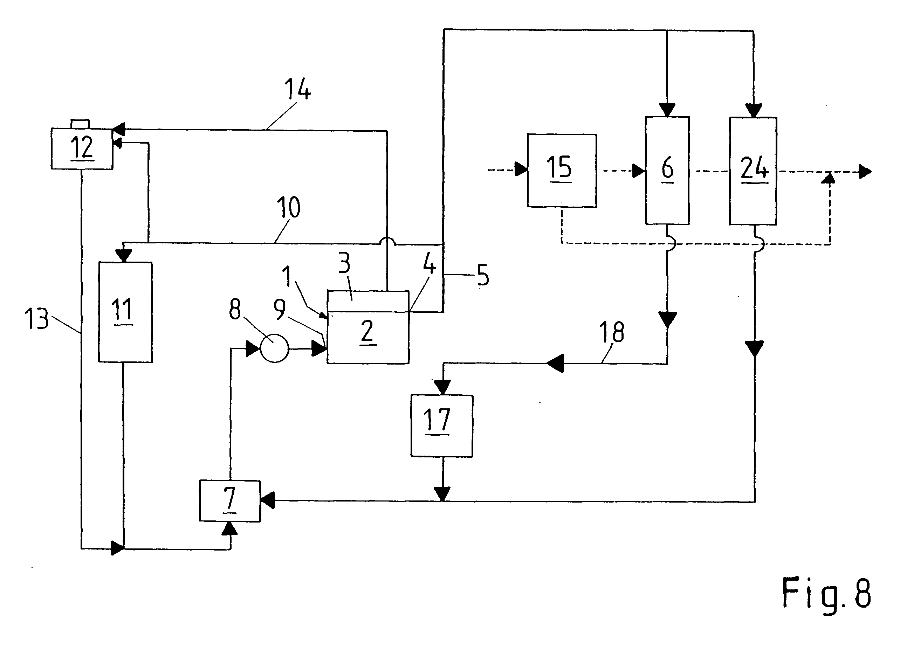

Die in den Figuren 6 bis 8 dargestellten Ausführungsformen entsprechen den anhand der Figuren 3 bis 5 beschriebenen Ausführungsformen mit der Ergänzung, daß parallel zum ersten Heizungs-Wärmetauscher 6 und zum Schmiermittel/Kühlmittel-Wärmetauscher 17 ein weiterer Heizungs-Wärmetauscher 24 geschaltet ist. Die Betriebszustände des ersten Heizungs-Wärmetauschers 6 entsprechen den mit Bezug auf die Figuren 3 bis 5 beschriebenen.

Die Strömungsrate für den zweiten Heizungs-Wärmetauscher 24 ist immer hoch eingestellt, so daß dementsprechend die Temperatur des aus dem zweiten Heizungs-Wärmetauscher 24 austretenden Kühlmittels hoch ist und zur schnelleren Erwärmung der Brennkraftmaschine 1 beiträgt.

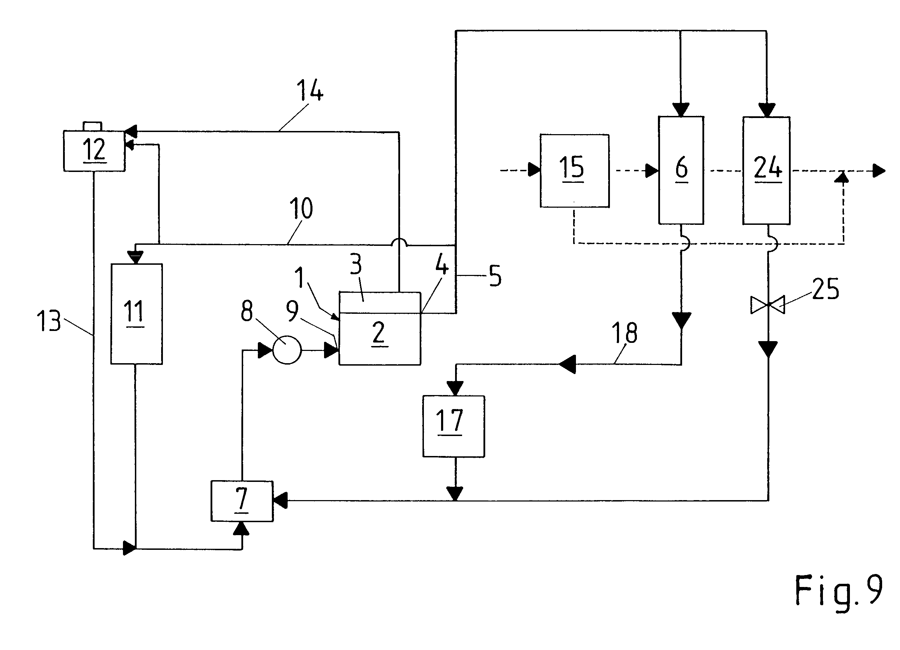

Die in Fig. 9 dargestellte Ausführungsform ist für den Fall vorgesehen, daß der Druckabfall in dem ersten Heizungs-Wärmetauscher 6 relativ gering ist. Ein Drosselventil 25 wird dann vorzugsweise in der vom zweiten Heizungs-Wärmetauscher 24 wegführenden Kühlmittelleitung angeordnet. Die Betriebsweise des Drosselventils 25 ist in diesem Fall gegenüber dem Fall der Fig. 6 umgekehrt. Das Drosselventil 25 wird bei Heizungsdefizit geöffnet und teilweise oder vollständig geschlossen, wenn kein Heizungsdefizit vorhanden ist.

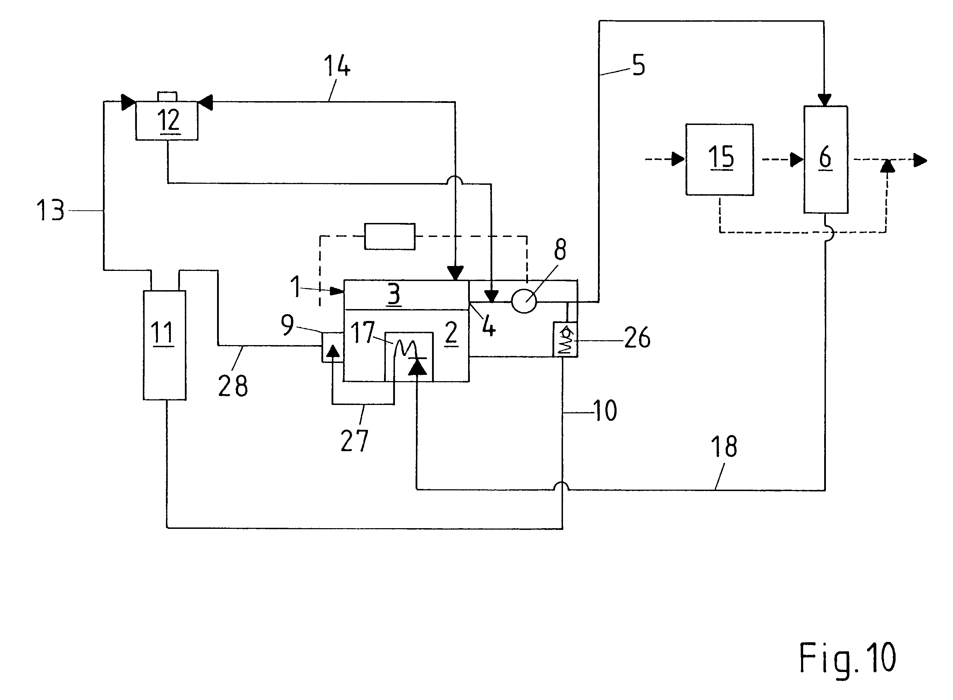

Gemäß den in den Figuren 10 bis 12 dargestellten Ausführungsformen ist die Kühlmittelpumpe 8 als geregelte Pumpe mit variabler Fördermenge ausgebildet und am Kühlmittelaustritt 4 der Brennkraftmaschine 1 angeordnet. Die Kühlmittelpumpe 8 beaufschlagt eine Kühlmittelleitung 5 und eine Bypassleitung 10. Die Kühlmittelleitung 5 führt zu einem Heizungs-Wärmetauscher 6 und die Bypassleitung 10 zu einem Kühler-Wärmetauscher 11. In die Bypassleitung 10 ist ein Überdruckventil 26 eingeschaltet, das nur bei Überschreiten eines vorgegebenen Förderdruckes der Kühlmittelpumpe 8 öffnet.

Vom Heizungs-Wärmetauscher 6 führt eine Kühlmittelleitung 18 über einen Schmiermittel/Kühlmittel-Wärmetauscher 17 und über eine Kühlmittelleitung 27 zum Kühlmitteleintritt 9 an der Brennkraftmaschine 1. Vom Kühler-Wärmetauscher 11 führt eine Kühlmittelleitung 28 ebenfalls zum Kühlmitteleintritt 9 an der Brennkraftmaschine 1.

Diese Ausführungsform kann im wesentlichen in vier unterschiedlichen Betriebszuständen betrieben werden.

In einem Betriebszustand, bei dem ein erhebliches Wärmedefizit zur Beheizung des Fahrgastraumes vorhanden ist, was insbesondere während des Warmlaufens der Brennkraftmaschine 1 oder bei extrem kalter Umgebungstemperatur der Fall ist, fließt Kühlmittel von der Kühlmittelpumpe 8 über die Kühlmittelleitung 5 zum Heizungs-Wärmetauscher 6 und von diesem über den Schmiermittel/Kühlmittel-Wärmetauscher 17 zurück zum Kühlmitteleintritt 9 an der Brennkraftmaschine 1. Die Kühlmittelpumpe 8 wird hierbei mit verhältnismäßig geringem Förderdruck arbeiten, so daß das Überdruckventil 26 in der Bypassleitung 10 zum Kühler-Wärmetauscher 11 nicht öffnet. Das Kühlmittel gelangt in den Schmiermittel/Kühlmittel-Wärmetauscher 17 hierbei mit einer niedrigeren Temperatur als das Schmiermittel der Brennkraftmaschine 1 und nimmt von diesem Wärme auf.

In einem Betriebszustand, bei dem kein Wärmedefizit für den Fahrgastraum vorhanden ist, wird die Kühlmittelpumpe 8 mit einem höheren Förderdruck betrieben, der jedoch nach wie vor geringer ist als der, bei dem das Überdruckventil 26 öffnen würde. Der Heizungs-Wärmetauscher 6 wird über das Steuerventil 15 luftseitig gesteuert. Da der wasserseitige Temperaturabfall bei hohem Kühlmitteldurchsatz im Heizungs-Wärmetauscher 6 gering ist, entzieht das Kühlmittel im Schmiermittel/Kühlmittel-Wärmetauscher 17 dem Schmiermittel kaum mehr Wärme.

In einem Betriebszustand, in dem genügend Wärme zur Verfügung steht, wird die Kühlmittelpumpe 8 mit einem noch höheren Förderdruck betrieben, der zu einer schnelleren Durchströmung des Heizungs-Wärmetauschers 6 führt. Das Kühlmittel verliert hierbei dementsprechend weniger an Wärme, wodurch die Temperatur des Kühlmittels höher als die des Schmiermittels ist, so daß es im Schmiermittel/Kühlmittel-Wärmetauscher 17 eher zu einer Erwärmung des Schmiermittels kommt.

In einem Betriebszustand, in dem überschüssige Wärme zur Verfügung steht, wird die Kühlmittelpumpe 8 mit einem so hohen Förderdruck betrieben, daß das Überdruckventil 26 öffnet und den Kühler-Wärmetauscher 11 beaufschlagt, so daß die überschüssige Wärme im Kühlmittel an die Umgebungsluft abgeführt werden kann.

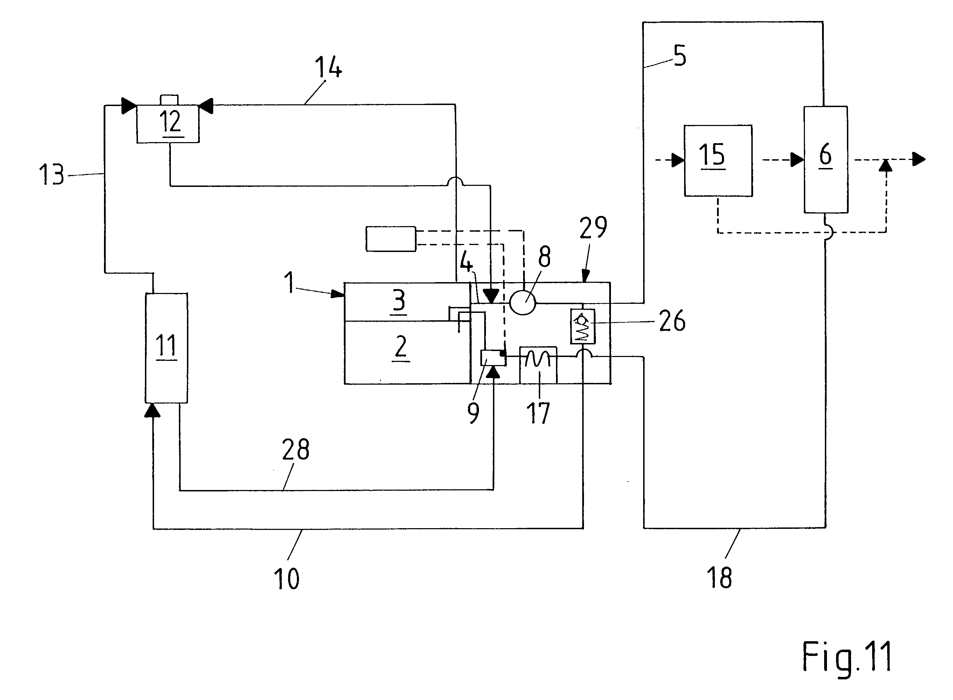

Bei der in Fig. 11 gezeigten Ausführungsform sind die erforderlichen Steuerungskomponenten, die von der regelbaren Kühlmittelpumpe 8, dem Überdruckventil 26, dem Schmiermittel/Kühlmittel-Wärmetauscher 17 und dem Kühlmitteleintritt 9 an der Brennkraftmaschine 1 gebildet werden, in einem Wärme-Steuerungsmodul 29 zusammengefaßt, das an der Brennkraftmaschine 1 angeordnet werden kann.

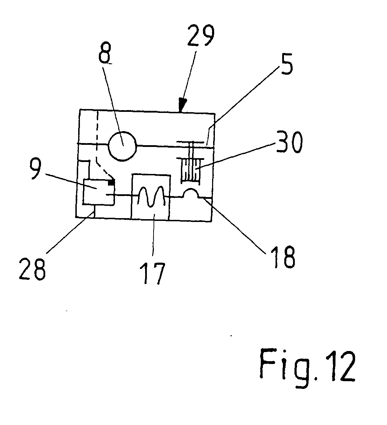

In Fig. 12 ist dargestellt, daß zusätzlich zu dem Überdruckventil 26 auch noch eine thermostatische Steuerung 30 hinzukommen kann, um allen Betriebsverhältnissen gerecht zu werden. Insbesondere ist eine unmittelbare Ansteuerung der Kühlmittelpumpe 8 mit variabler Fördermenge durch ein temperaturempfindliches Steuerelement möglich.

## Patentansprüche

1. Verfahren zum Heizen eines Kraftfahrzeug-Fahrgastraumes, insbesondere bei einem Kaltstart oder bei ähnlichen Bedingungen, wobei das Kraftfahrzeug eine mit Kühlmittel gekühlte und mit Schmiermittel geschmierte Brennkraftmaschine (1) sowie einen Kühl- und Heizungskreislauf mit mindestens einem Heizungs-Wärmetauscher (6, 24) und einem Kühler-Wärmetauscher (11) aufweist, und wobei aus der Brennkraftmaschine (1) austretendes Kühlmittel in dem Heizungs-Wärmetauscher (6, 24) auf eine Temperatur abgekühlt wird, die niedriger als die des Schmiermittels ist, anschließend zumindest teilweise in einem Schmiermittel/Kühlmittel-Wärmetauscher (17) wieder erwärmt und dann, ohne den Kühler-Wärmetauscher (11) zu durchströmen, der Brennkraftmaschine (1) wieder zugeführt wird,
**dadurch gekennzeichnet,**
**daß** in Betriebszuständen mit Fahrgastraum-Heizungsdefizit das gesamte aus der Brennkraftmaschine (1) austretende Kühlmittel zu dem Heizungs-Wärmetauscher (6, 24) und dann zumindest teilweise zu dem Schmiermittel/Kühlmittel-Wärmetauscher geleitet wird, ohne den Kühler-Wärmetauscher (11) zu durchströmen, und
**daß** in Betriebszuständen ohne Fahrgastraum-Heizungsdefizit das den Kühler-Wärmetauscher (11) durchströmende Kühlmittel zumindest teilweise der Brennkraftmaschine (1) zugeführt wird, ohne den Schmiermittel/Kühlmittel-Wärmetauscher (17) zu durchströmen.

2. Kühl- und Heizungskreislauf für Kraftfahrzeuge mit einer durch Kühlmittel gekühlten und durch Schmiermittel geschmierten Brennkraftmaschine (1), deren von einer Kühlmittelpumpe (8) gefördertes Kühlmittel über mindestens einen Heizungs-Wärmetauscher (6, 24) und einen Kühler-Wärmetauscher (11) zirkuliert, wobei in Strömungsrichtung hinter dem Heizungs-Wärmetauscher (6, 24) ein Schmiermittel/Kühlmittel-Wärmetauscher (17) angeordnet ist, welchem Schmiermittel aus der Brennkraftmaschine (1) zugeführt wird, und die Strömungsrate des durch den Heizungs-Wärmetauscher (6, 24) strömenden Kühlmittels soweit reduzierbar ist, daß die Kühlmittelaustrittstemperatur aus dem Heizungs-Wärmetauscher (6, 24) niedriger ist als die Schmiermitteltemperatur,
**dadurch gekennzeichnet,**
**daß** der Kühler-Wärmetauscher (11) wegschaltbar ist und im nicht weggeschalteten Zustand sein Kühlmittelaustritt ohne Einbindung des Schmiermittel/Kühlmittel-Wärmetauschers (17) mit dem Kühlmitteleintritt (9) der Brennkraftmaschine (1) verbindbar ist, wobei
in Betriebszuständen mit Fahrgastraum-Heizungsdefizit das gesamte aus der Brennkraftmaschine (1) austretende Kühlmittel den Heizungs-Wärmetauscher (6, 24) und dann zumindest teilweise den Schmiermittel/Kühlmittel-Wärmetauscher (17) durchströmt, ohne den Kühler-Wärmetauscher (11) zu durchlaufen, und
in Betriebszuständen ohne Fahrgastraum-Heizungsdefizit zumindest ein Teil des den Kühler-Wärmetauscher (11) durchströmenden Kühlmittels zur Brennkraftmaschine (1) strömt, ohne den Schmiermittel/Kühlmittel-Wärmetauscher (17) zu durchlaufen.

3. Kühl- und Heizungskreislauf nach Anspruch 2, **dadurch gekennzeichnet, daß** der Heizungs-Wärmetauscher (6) in Gegenstrombauweise ausgebildet ist.

4. Kühl- und Heizungskreislauf nach Anspruch 2 oder 3, **dadurch gekennzeichnet, daß** die Kühlmittelpumpe (8) in einer Hauptleitung (18) in Strömungsrichtung zwischen Heizungs-Wärmetauscher (6) und Brennkraftmaschine (1) angeordnet ist und zwischen Kühlmittelpumpe (8) und Brennkraftmaschine (1) eine wegschaltbare Nebenleitung (16) zum Schmiermittel/Kühlmittel-Wärmetauscher (17) abzweigt, die in Strömungsrichtung vor der Kühlmittelpumpe (8) wieder in die Hauptleitung (18) einmündet.

5. Kühl- und Heizungskreislauf nach Anspruch 4, **dadurch gekennzeichnet, daß** die Nebenleitung (16) durch ein in Strömungsrichtung vor dem Schmiermittel/Kühlmittel-Wärmetauscher (17) angeordnetes Schließventil (19) wegschaltbar ist.

6. Kühl- und Heizungskreislauf nach Anspruch 4, **dadurch gekennzeichnet, daß** die Nebenleitung (16) durch ein in Strömungsrichtung vor dem Schmiermittel/Kühlmittel-Wärmetauscher (17) angeordnetes Dreiwegeventil (20) wegschaltbar ist, dessen dritter Anschluß mit dem Kühlmittelaustritt (4) der Brennkraftmaschine (1) verbunden ist.

7. Kühl- und Heizungskreislauf nach Anspruch 2 oder 3, **dadurch gekennzeichnet, daß** der den Heizungs-Wärmetauscher (6) und den Schmiermittel/Kühlmittel-Wärmetauscher (17) enthaltende Kreislauf (5, 18) für eine auf niedrige bis mittlere Brennkraftmaschinen-Drehzahlen bezogene Kühlmittel-Strömungsrate ausgelegt ist.

8. Kühl- und Heizungskreislauf nach Anspruch 2 oder 3, **dadurch gekennzeichnet, daß** zwischen Heizungs-Wärmetauscher (6) und Schmiermittel/Kühlmittel-Wärmetauscher (17) ein Drosselventil (21) angeordnet ist.

9. Kühl- und Heizungskreislauf nach Anspruch 2 oder 3, **dadurch gekennzeichnet, daß** der Kühlmittelaustritt des Heizungs-Wärmetauschers (6) über eine Verzweigung einerseits mit dem Kühlmitteleintritt des Schmiermittel/Kühlmittel-Wärmetauschers (17) und andererseits mit dem Kühlmitteleintritt (9) der Brennkraftmaschine (1) verbunden ist, wobei zur Verbindung des Heizungs-Wärmetauschers (6) mit dem Schmiermittel/Kühlmittel-Wärmetauscher (17) ein Dreiwegeventil (22) vorgesehen ist, dessen zweiter Einlaß mit dem Kühlmittelaustritt (4) der Brennkraftmaschine (1) verbunden ist.

10. Kühl- und Heizungskreislauf nach einem der Ansprüche 7 bis 9, **dadurch gekennzeichnet, daß** ein zweiter Heizungs-Wärmetauscher (24) parallel zum ersten Heizungs-Wärmetauscher (6) und zum Schmiermittel/Kühlmittel-Wärmetauscher (17) geschaltet und die Strömungsrate des Kühlmittels durch den zweiten Heizungs-Wärmetauscher (24) größer als die durch den ersten Heizungs-Wärmetauscher (6) ist.

11. Kühl- und Heizungskreislauf nach Anspruch 2 oder 3, **dadurch gekennzeichnet, daß** ein zweiter Heizungs-Wärmetauscher (24) parallel zum ersten Heizungs-Wärmetauscher (6) und zum Schmiermittel/Kühlmittel-Wärmetauscher (17) geschaltet ist und die Strömungsrate des den zweiten Heizungs-Wärmetauscher (24) durchströmenden Kühlmittels einstellbar ist.

12. Kühl- und Heizungskreislauf nach Anspruch 2, **dadurch gekennzeichnet,**
**daß** eine Kühlmittelpumpe (8) mit variabler Fördermenge in Strömungsrichtung vor einer Verzweigung der Kühlmittelleitung (5) zu einerseits dem Heizungs-Wärmetauscher (6) und zu andererseits einer Bypassleitung (10) zu dem Kühler-Wärmetauscher (11) angeordnet ist, und daß in der Bypassleitung (10) ein Überdruckventil (26) vorgesehen ist, das nur bei Überschreiten eines vorgegebenen Förderdruckes Kühlmittel unmittelbar zum Kühler-Wärmetauscher (11) und von dort zurück zu einem Kühlmitteleintritt (9) an der Brennkraftmaschine (1) führt.

13. Kühl- und Heizungskreislauf nach Anspruch 12, **dadurch gekennzeichnet, daß** das Überdruckventil (26) ein thermostatisch gesteuertes Überdruckventil ist.

14. Kühl- und Heizungskreislauf nach Anspruch 12 oder 13, jeweils in Verbindung mit einem der Ansprüche 2 bis 11, **dadurch gekennzeichnet, daß** bei einer Brennkraftmaschine (1), deren Kühlmittelauslaß und deren Kühlmitteleinlaß zueinander benachbart angeordnet sind, die für die Wärme-Steuerung erforderlichen Bauteile, wie die variable Kühlmittelpumpe (8), die Bypassleitung (10) mit dem Überdruckventil (26), der Schmiermittel/Kühlmittel-Wärmetauscher (17) und der Kühlmitteleintritt (9) in einem Wärme-Steuerungsmodul (29) zusammengefaßt sind, das an die Brennkraftmaschine (1) im Bereich deren Kühlmittelauslasses und -einlasses anfügbar ist.

## Claims

1. Method of heating for the passenger compartment of a motor vehicle, in particular with a cold start or with similar conditions, wherein the motor vehicle has a combustion engine (1) cooled with coolant and lubricated with lubricant and also a cooling and heating circuit with at least one heating heat exchanger (6, 24) and one cooler heat exchanger (11) and wherein coolant leaving the combustion engine (1) is cooled in the heating heat exchanger (6, 24) to a temperature which is lower than that of the lubricant, subsequently at least partly heated again in a lubricant / coolant heat exchanger (17) and then, without flowing through the cooler heat exchanger (1), fed to the combustion engine (1) again,
**characterised in that**
in operating conditions with passenger compartment heating deficit all the coolant leaving the combustion engine (1) is fed to the heating heat exchanger (6, 24) and then at least partly to the lubricant / coolant heat exchanger without flowing through the cooler heat exchanger (11), and
that in operating conditions without passenger compartment heating deficit the coolant flowing through the cooler heat exchanger (11) is at least partly fed to the combustion engine (1) without flowing through the lubricant / coolant heat exchanger (17).

2. Cooling and heating circuit for motor vehicles with a combustion engine (1) cooled by coolant and lubricated by lubricant, whose coolant conveyed by a coolant pump (8) circulates via at least one heating heat exchanger (6, 24) and a cooler heat exchanger (11), wherein in the flow direction behind the heating heat exchanger (6, 24) a lubricant / coolant heat exchanger (17) is arranged, to which lubricant is fed from the combustion engine (1), and the flow rate of the coolant flowing through the heating heat exchanger (6, 24) can be reduced so far that the coolant discharge temperature from the heating heat exchanger (6, 24) is lower than the lubricant temperature,
**characterised in that**
the cooler heat exchanger (11) can be switched aside and in the not switched aside status its coolant outlet can be connected without integration of the lubricant / coolant heat exchanger (17) with the coolant inlet of the combustion engine (1), wherein
in operating conditions with passenger compartment heating deficit all the coolant leaving the combustion engine (1) flows through the heating heat exchanger (6, 24) and then at least partly through the lubricant / coolant heat exchanger (17) without going through the cooler heat exchanger (11), and
in operating conditions without passenger compartment heating deficit at least part of the coolant flowing through the cooler heat exchanger (11) flows to the combustion engine (1) without going through the lubricant / coolant heat exchanger (17).

3. Cooling and heating circuit according to Claim 2
**characterised in that** the heating heat exchanger (6) is formed by way of counter-flow.

4. Cooling and heating circuit according to Claim 2 or 3
**characterised in that** the coolant pump (8) is arranged in a main pipe (18) in the flow direction between the heating heat exchanger (6) and the combustion engine (1) and between the coolant pump (8) and the combustion engine (1) a secondary pipe (16) to the lubricant / coolant heat exchanger (17) which can be switched aside branches off, wherein this secondary pipe (16) flows in the flow direction before the coolant pump (8) into the main pipe (18) again.

5. Cooling and heating circuit according to Claim 4
**characterised in that** the secondary pipe (16) can be switched aside by a closing valve (19) arranged in the flow direction before the lubricant / coolant heat exchanger (17).

6. Cooling and heating circuit according to Claim 4
**characterised in that** the secondary pipe (16) can be switched aside by a three-way valve (20) arranged in the flow direction before the lubricant / coolant heat exchanger (17), wherein the third connection thereof is connected with the coolant outlet (4) of the combustion engine (1).

7. Cooling and heating circuit according to Claim 2 or 3
**characterised in that** the circuit (5, 18) containing the heating heat exchanger (6) and the lubricant / coolant heat exchanger (17) is designed for a coolant flow rate relating to low to average.

8. Cooling and heating circuit according to Claim 2 or 3
**characterised in that** a throttle valve (21) is arranged between the heating heat exchanger (6) and the lubricant / coolant heat exchanger (17).

9. Cooling and heating circuit according to Claim 2 or 3
**characterised in that** the coolant outlet of the heating heat exchanger (6) is connected via branching on the one hand with the coolant inlet of the lubricant / coolant heat exchanger (17) and on the other hand with the coolant inlet (9) of the combustion engine (1), wherein for the purpose of connecting the heating heat exchanger (6) with the lubricant / coolant heat exchanger (17) a three-way valve (22) is provided, the second inlet of which is connected with the coolant outlet (4) of the combustion engine (1).

10. Cooling and heating circuit according to one of the Claims 7 to 9 **characterised in that** a second heating heat exchanger (24) is switched parallel to the first heating heat exchanger (6) and to the lubricant / coolant heat exchanger (17) and the flow rate of the coolant through the second heating heat exchanger (24) is greater than that through the first heating heat exchanger (6).

11. Cooling and heating circuit according to Claim 2 or 3
**characterised in that** a second heating heat exchanger (24) is switched parallel to the first heating heat exchanger (6) and to the lubricant / coolant heat exchanger (17) and the flow rate of the coolant flowing through the second heating heat exchanger (24) can be set.

12. Cooling and heating circuit according to Claim 2
**characterised in that** a coolant pump (8) with variable conveying capacity is arranged in the flow direction before a branching of the coolant pipe (5) to on the one hand the heating heat exchanger (6) and to on the other hand a bypass pipe (10) to the cooler heat exchanger (11), and that in the bypass pipe (10) a pressure relief valve (26) is provided, which only upon exceeding of a given conveying pressure feeds coolant directly to the cooler heat exchanger (11) and from there back to a coolant inlet (9) on the combustion engine (1).

13. Cooling and heating circuit according to Claim 12
**characterised in that** the pressure relief valve (26) is a thermostatically controlled pressure relief valve.

14. Cooling and heating circuit according to Claim 12 or 13, in association with one of the Claims 2 to 11,
**characterised in that** with a combustion engine (1) whose coolant outlet and coolant inlet are arranged adjacent to each other the necessary components for the heat control, like the variable coolant pump (8), the bypass pipe (10) with the pressure relief valve (26), the lubricant / coolant heat exchanger (17) and the coolant inlet (9) are brought together in a heat control module (29), which can be attached to the combustion engine (1) in the area of its coolant outlet and inlet.

## Revendications

1. Procédé pour chauffer l'habitacle d'un véhicule automobile à moteur, en particulier lors d'un démarrage à froid ou dans des conditions identiques, le véhicule automobile présentant un moteur à combustion interne (1) refroidi par réfrigérant et lubrifié par lubrifiant et un circuit de refroidissement et de chauffage avec au moins un échangeur de chaleur pour chauffage (6, 24) et un échangeur de chaleur à refroidisseur (11), et le réfrigérant sortant du moteur à combustion interne (1) étant refroidi dans l'échangeur de chaleur pour chauffage (6, 24) jusqu'à une température inférieure à celle du lubrifiant, étant ensuite réchauffé au moins partiellement dans un échangeur de chaleur à lubrifiant/réfrigérant (17) et étant ensuite amené au moteur à combustion interne (1) sans traverser l'échangeur de chaleur à refroidisseur (11), **caractérisé**
**en ce que**, dans des états de service avec un déficit en chauffage pour l'habitacle, l'ensemble du réfrigérant sortant du moteur à combustion interne (1) est conduit à l'échangeur de chaleur pour chauffage (6, 24) et ensuite au moins partiellement à l'échangeur de chaleur à lubrifiant/réfrigérant sans traverser l'échangeur de chaleur à refroidisseur (11), et en ce que, dans des états de service sans déficit de chauffage pour l'habitacle, le réfrigérant traversant l'échangeur de chaleur à refroidisseur (11) est amené au moins partiellement au moteur à combustion interne (1) sans traverser l'échangeur de chaleur (17) à lubrifiant/réfrigérant (17).

2. Circuit de refroidissement et de chauffage pour véhicules automobiles avec un moteur à combustion interne (1) refroidi par réfrigérant et lubrifié par lubrifiant, dont le réfrigérant transporté par une pompe à réfrigérant (8) circule par au moins un échangeur de chaleur pour chauffage (6, 24) et un échangeur de chaleur à refroidisseur (11), un échangeur de chaleur à lubrifiant/réfrigérant (17), auquel est amené du lubrifiant provenant du moteur à combustion interne (1), étant disposé dans le sens d'écoulement après l'échangeur de chaleur pour chauffage (6, 24), et le taux d'écoulement du réfrigérant circulant par l'échangeur de chaleur pour chauffage (6, 24) pouvant être réduit jusqu'à ce que la température de sortie du réfrigérant de l'échangeur de chaleur pour chauffage (6, 24) soit plus faible que la température du lubrifiant, **caractérisé**
**en ce que** l'échangeur de chaleur à refroidisseur (11) peut être mis hors circuit et que, dans l'état non hors-circuit, sa sortie réfrigérante peut être reliée à l'entrée réfrigérant (9) du moteur à combustion interne (1) sans l'intégration de l'échangeur de chaleur à lubrifiant/réfrigérant (17), l'ensemble du réfrigérant sortant du moteur à combustion interne (1) traversant l'échangeur de chaleur pour chauffage (6, 24) et ensuite au moins partiellement l'échangeur de chaleur à lubrifiant/réfrigérant (17) dans des états de service avec un déficit de chauffage pour l'habitable sans parcourir l'échangeur de chaleur à refroidisseur (11), et au moins une partie du réfrigérant traversant l'échangeur de chaleur à refroidisseur (11) circulant vers le moteur à combustion interne sans parcourir l'échangeur de chaleur à lubrifiant/réfrigérant (17) dans des états de service sans déficit de chauffage pour l'habitacle.

3. Circuit de refroidissement et de chauffage selon la revendication 2, **caractérisé en ce que** l'échangeur de chaleur pour chauffage (6) est conçu dans une forme de construction à contre-flux.

4. Circuit de refroidissement et de chauffage selon la revendication 2 ou 3, **caractérisé en ce que** la pompe à réfrigérant (8) est disposée dans une conduite principale (18) dans le sens d'écoulement entre l'échangeur de chaleur pour chauffage (6) et le moteur à combustion interne (1) et, entre la pompe à réfrigérant (8) et le moteur à combustion interne (1), une conduite secondaire (16) pouvant être mise hors circuit bifurque vers l'échangeur de chaleur à lubrifiant/réfrigérant (17), laquelle débouche à nouveau dans la conduite principale (18) dans le sens d'écoulement avant la pompe à réfrigérant (8).

5. Circuit de refroidissement et de chauffage selon la revendication 4, **caractérisé en ce que** la conduite secondaire (16) peut être mise hors circuit par une vanne de fermeture (19) disposée dans le sens d'écoulement avant l'échangeur de chaleur à lubrifiant/réfrigérant (17).

6. Circuit de refroidissement et de chauffage selon la revendication 4, **caractérisé en ce que** la conduite secondaire (16) peut être mise hors circuit par une vanne à trois voies (20) disposée dans le sens d'écoulement avant l'échangeur de chaleur à lubrifiant/réfrigérant (17), dont le troisième branchement est relié à la sortie réfrigérant (4) du moteur à combustion interne (1).

7. Circuit de refroidissement et de chauffage selon la revendication 2 ou 3, **caractérisé en ce que** le circuit (5, 18) contenant l'échangeur de chaleur pour chauffage (6) et l'échangeur de chaleur (17) à lubrifiant/réfrigérant est conçu pour un taux d'écoulement de réfrigérant rapporté à des régimes faibles à moyens de moteurs à combustion interne.

8. Circuit de refroidissement et de chauffage selon la revendication 2 ou 3, **caractérisé en ce qu'**une vanne d'étranglement (21) est disposée entre l'échangeur de chaleur pour chauffage (6) et l'échangeur de chaleur à lubrifiant/réfrigérant (17).

9. Circuit de refroidissement et de chauffage selon la revendication 2 ou 3, **caractérisé en ce que** la sortie réfrigérant de l'échangeur de chaleur pour chauffage (6) est reliée par une bifurcation d'une part à l'entrée réfrigérant de l'échangeur de chaleur à lubrifiant/réfrigérant (17) et d'autre part à l'entrée réfrigérant (9) du moteur à combustion interne (1), une vanne à trois voies (22) étant prévue pour la liaison de l'échangeur de chaleur pour chauffage (6) avec l'échangeur de chaleur à lubrifiant/réfrigérant (17), vanne dont la deuxième entrée est reliée à l'entrée réfrigérant (4) du moteur à combustion interne (1).

10. Circuit de refroidissement et de chauffage selon l'une quelconque des revendications 7 à 9, **caractérisé en ce qu'**un deuxième échangeur de chaleur pour chauffage (24) est branché en parallèle avec le premier échangeur de chaleur pour chauffage (6) et l'échangeur de chaleur à lubrifiant/réfrigérant (17) et le taux d'écoulement du réfrigérant dans le deuxième échangeur de chaleur pour chauffage (24) est supérieur à celui du premier échangeur de chaleur pour chauffage (6).

11. Circuit de refroidissement et de chauffage selon la revendication 2 ou 3, **caractérisé en ce qu'**un deuxième échangeur de chaleur pour chauffage (24) est branché en parallèle avec le premier échangeur de chaleur pour chauffage (6) et avec l'échangeur de chaleur à lubrifiant/réfrigérant (17) et le taux d'écoulement du réfrigérant parcourant le deuxième échangeur de chaleur pour chauffage (24) est réglable.

12. Circuit de refroidissement et de chauffage selon la revendication 2, **caractérisé en ce qu'**une pompe à réfrigérant (8) avec débit variable est disposée dans le sens d'écoulement avant une bifurcation de la conduite à réfrigérant (5) pour d'une part l'échangeur de chaleur pour chauffage (6) et pour d'autre part une conduite à dérivation (10) pour l'échangeur de chaleur à refroidisseur (11), et **en ce qu'**il est prévu dans la conduite à dérivation (10) une vanne de surpression (26), qui va directement à l'échangeur de chaleur à refroidisseur (11) seulement en cas de dépassement d'une pression de refoulement prédéfinie et de là revient à une entrée réfrigérant (9) sur le moteur à combustion interne (1).

13. Circuit de refroidissement et de chauffage selon la revendication 12, **caractérisé en ce que** la vanne de surpression (26) est une vanne de surpression commandée par thermostat.

14. Circuit de refroidissement et de chauffage selon la revendication 12 ou 13, respectivement en liaison avec l'une quelconque des revendications 2 à 11, **caractérisé en ce que**, sur un moteur à combustion interne (1), dont la sortie réfrigérant et l'entrée réfrigérant sont disposées l'une à côté de l'autre, les éléments de construction nécessaires pour la commande de la chaleur tels que la pompe à réfrigérant (8) variable, la conduite à dérivation (10) avec la vanne de surpression (26), l'échangeur de chaleur à lubrifiant/réfrigérant (17) et l'entrée réfrigérant (9) sont regroupés dans un module de commande de chaleur (29), qui peut être accolé au moteur à combustion interne (1) dans la zone de sa sortie et de son entrée réfrigérant.
